(19) Europäisches Patentamt
European Patent Office
Office européen des brevets

(11) Publication number: **0 140 207**
**A2**

# (12) EUROPEAN PATENT APPLICATION

(21) Application number: 84111912.6

(22) Date of filing: 04.10.84

(51) Int. Cl.[4]: C 08 F 8/00

(30) Priority: 06.10.83 US 539732

(43) Date of publication of application: 08.05.85 Bulletin 85/19

(84) Designated Contracting States: DE FR GB IT NL

(71) Applicant: E.I. DU PONT DE NEMOURS AND COMPANY
1007 Market Street
Wilmington Delaware 19898(US)

(72) Inventor: Nersasian, Arthur
335 Spalding Road
Wilmington Delaware 19803(US)

(74) Representative: von Kreisler, Alek, Dipl.-Chem. et al,
Deichmannhaus am Hauptbahnhof
D-5000 Köln 1(DE)

## (54) A process for rapidly curing a brominated fluoroelastomer.

(57) A process for rapidly curing a fluoroelastomer which comprises mixing and heating a fluoroelastomer copolymer whose interpolymerized units consist essentially of vinylidene fluoride, at least one other fluorine-containing monomer copolymerizable therewith, said monomer being a compound which contains 2-7 carbon atoms, contains no bromine, and contains at least as many fluorine atoms as carbon atoms and contains up to 3 mole percent of units derived from a bromine-containing olefin; a quaternary phosphonium compound; a bisphenol or an ammonium or phosphonium salt thereof; and a dialkylaminopyridine or a diazabicyclo compound having the formula

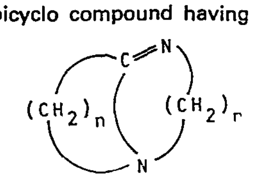

or

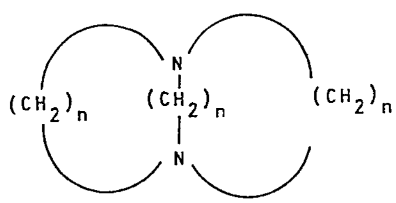

where n is 2-8 or

0.2-0.8 parts by weight per hundred parts fluoroelastomer of a carboxylic acid salt of (a) or (b).



Croydon Printing Company Ltd

TITLE

# A PROCESS FOR RAPIDLY CURING A BROMINATED FLUOROELASTOMER

## BACKGROUND OF THE INVENTION

This invention is directed to a process for rapidly curing a fluoroelastomer that contains units derived from a brominated olefin.

Fluoroelastomers that contain units derived from brominated olefins have been favorably accepted by the industry. These fluoroelastomers are peroxide-curable and the cured products have good resistance to damage by heat, solvents and corrosive chemicals. Such fluoroelastomers containing units derived from brominated olefins can also be cured with quaternary phosphonium compounds and bisphenols. This is advantageous because of the improved milling behavior and mold release characteristics of this cure system as compared to a peroxide cure system. However, the cure times are excessively long and can be as much as about 20 minutes. Such long cure times are uneconomical because of the limitation on equipment available to the manufacturer. The present invention describes a process in which compositions of fluoroelastomer containing units derived from a brominated olefin are readily processible, do not stick to the mold and, most importantly, have fast cure times while still showing excellent physical properties.

## SUMMARY OF THE INVENTION

The present invention is directed to a process for rapidly curing a fluoroelastomer composition which comprises mixing and heating:

(1) a fluoroelastomer copolymer whose interpolymerized units consist essentially of (a) vinylidene fluoride, (b) at least one other

AD-5353

fluorine-containing monomer copolymerizable therewith, said monomer being a compound which contains 2-7 carbon atoms, contains no bromine atoms, and contains at least as many fluorine atoms as carbon atoms and (c) contains up to 3 mole percent of units derived from a bromine-containing olefin with the proviso that enough of such units are present to provide at least 0.05 weight percent bromine in the copolymer;

(2) a vulcanization accelerator that is a quaternary phosphonium compound;

(3) a cross-linking agent selected from the group consisting of bisphenols or an ammonium or phosphonium salt thereof;

the improvement which comprises adding to the composition

0.1-0.4 parts by weight per hundred parts fluoroelastomer of (a) a dialkylaminopyridine wherein the alkyl groups independently contain 1-5 carbon atoms or (b) a diazabicyclo compound of the formula

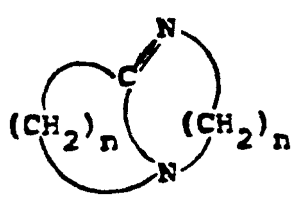

or

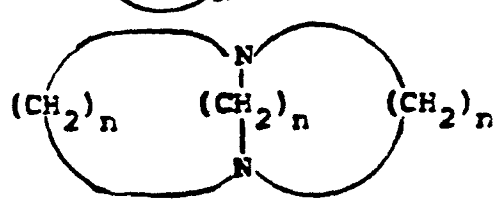

where n is 2-8 or

0.2-0.8 parts by weight per hundred parts fluoroelastomer of a carboxylic acid salt of (a) or (b).

## DESCRIPTION OF THE PREFERRED EMBODIMENTS

The fluoroelastomer compositions contain 0.1-0.4 parts by weight, preferably 0.12-0.2 parts by

weight, per hundred parts fluoroelastomer of (a) a dialkylaminopyridine wherein the alkyl groups independently contain 1-5 carbon atoms or (b) a diazabicyclo compound of the formula

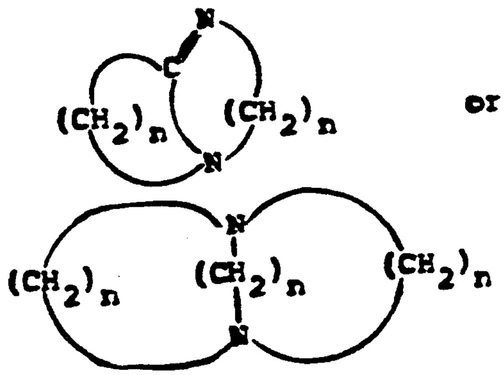

or

where n is 2-8 or

0.2-0.8 parts per hundred parts fluoroelastomer of a carboxylic acid salt of (a) or (b). Representative diazabicyclo compounds include 1,5-diazabicyclo[4,3,0]non-5-ene, 1,4-diazabicyclo[2,2,2]octane, 1,8-diazabicyclo[5,4,0] undec-7-ene and carboxylic acid salts of these compounds, said carboxylic acids usually containing from 6-20 carbon atoms, for example, octanoic acid, dodecanoic acid and hexanoic acid. Representative dialkylaminopyridines include p-dimethylaminopyridine, dipropylaminopyridine and carboxylic acid salts thereof, said carboxylic acids usually containing 6-20 carbon atoms.

The fluoroelastomer contains units derived from vinylidene fluoride. In addition to units of vinylidene fluoride, the fluoroelastomer copolymer contains units derived from at least one other fluorine-containing monomer copolymerizable with vinylidene fluoride, said monomer being a compound which contains 2-7 carbon atoms, contains no bromine atoms, and contains at least as many fluorine atoms

as carbon atoms. Representative monomers include hexafluoropropylene, pentafluoropropylene, tetrafluoroethylene and perfluoroalkylperfluorovinyl ether where the alkyl group contains 1-5 carbon atoms. Preferred combinations of fluoroelastomers include units from any one of the following two combinations: vinylidene fluoride and hexafluoropropylene or pentafluoropropylene and tetrafluoroethylene or vinylidene fluoride, tetrafluoroethylene and perfluoromethylperfluorovinyl ether. The fluoroelastomers that are generally used in this process and cure under ordinary conditions rather slowly are fluoroelastomers containing at least about 30% by weight vinylidene fluoride units. Usually such fluoroelastomers contain about 30-60 weight percent vinylidene fluoride units, about 20-50 weight percent hexafluoropropylene units or pentafluoropropylene or perfluoromethyl perfluorovinyl ether units and about 3-35 weight percent tetrafluoroethylene units. The fluoroelastomers used in the process also contain units derived from a bromine-containing olefin. The term "bromine-containing olefin" as used herein means an olefin in which at least one hydrogen atom has been replaced with a bromine atom, and optionally one or more of the remaining hydrogen atoms have been replaced with an atom of another halogen, preferably fluorine. Some compounds of this type are available commercially and others can be prepared by methods known in the art, for example as shown by Tarrant and Tandon, 34 J. Org. Chem. 864 (1969) and by Fainberg and Miller, JACS 4170 (1957). Representative bromine-containing olefins which are copolymerizable with the monomers used to form the copolymer include bromotrifluoroethylene,

4-bromo-3,3,4,4-tetrafluorobutene-1, vinyl bromide, 1-bromo-2,2-difluoroethylene, perfluoroallylbromide, 4-bromo-1,1,2-trifluorobutene, 4-bromo-1,1,3,3,4,4-hexafluorobutene, 4-bromo-3-chloro-1,1,3,4,4-pentafluorobutene, 6-bromo-5,5,6,6-tetrafluorohexene, 4-bromo-perfluorobutene-1, and 3,3-difluoroallylbromide. It is preferable to use sufficient units of the brominated olefin to provide about 0.3-1.5 weight percent bromine in the fluoroelastomer copolymer. Bromine-containing fluoroelastomers used in the process of this invention are further described in U.S. Patent 4,214,060, the disclosure of which is incorporated herein by reference.

The vulcanization accelerators used in the process of this invention are quaternary phosphonium compounds. These compounds are usually added in amounts of from about 0.6-2 parts by weight per hundred parts fluoroelastomer, preferably 1-1.3 parts by weight. The phosphonium compounds can be represented by the formula

$$\left[ \begin{array}{c} R_2 \\ R_1 - P - R_3 \\ R_4 \end{array} \right]^{+} \qquad X^{(-)}{}_n$$

where P is phosphorous; $R_1$, $R_2$, $R_3$ and $R_4$ are selected individually from the group alkyl, aryl, aralkyl and alkenyl usually containing 1-20 carbon atoms, and the chlorine, fluorine, bromine, cyano, -OR, and -COOR substituted analogs thereof, R being selected from the group $C_1$-$C_{20}$ alkyl, aryl, aralkyl and alkenyl; X is a halide, especially chloride, sulfate, sulfite, bisulfite, carbonate, nitrate, pentachlorothiophenolate, tetrafluoroborate,

hexafluorosilicate, hexafluorophosphate, dimethyl phosphate, a $C_1$-$C_{20}$ alkyl-, aryl-, aralkyl-, and alkenyl-/carboxylate and dicarboxylate; n is 1 or 2 and equal to the valance of anion X. These compounds are described in Pattison U.S. Patent 3,876,654.

Particularly preferred accelerators are benzyl triphenyl phosphonium chloride and -bromide and phenolates of 4,4'-hexafluoroisopropylidene diphenol. Other useful accelerators include the following: methyl trioctyl phosphonium tetrafluoroborate, methallyl tributyl phosphonium chloride or- bromide, tetraphenyl phosphonium bromide and -chloride, benzyl trioctyl phosphonium bromide and -chloride, benzyl tributyl phosphonium bromide and- chloride, methyl trioctyl phosphonium acetate, methyl trioctyl phosphonium chloride, methoxyethoxyethyl trioctyl phosphonium chloride, tetraoctyl phosphonium bromide, butyl trioctyl phosphonium bromide, 1-carbethoxyethyl triphenyl phosphonium chloride, tetrabutyl phosphonium chloride, 2,4-dichlorobenzyl triphenyl phosphonium chloride, m-trifluoromethylbenzyl trioctyl phosphonium chloride, 2,2,3,3-tetrafluoropropyl trioctyl phosphonium chloride, 2,2,3,3,4,4,5,5-octafluoropentyl trioctyl phosphonium chloride, isobutyl triphenyl phosphonium bromide, 2-pentyl triphenyl phosphonium bromide, 4-methylbenzyl triphenyl phosphonium chloride, 4-chlorobenzyl triphenyl phosphonium chloride, diphenylmethyl triphenyl phosphonium chloride, m-trifluoromethylbenzyl triphenyl phosphonium chloride, 1-naphthylmethyl triphenyl phosphonium chloride, 2-cyanobenzyl triphenyl phosphonium bromide, 4-cyanobutyl triphenyl phosphonium bromide, α-carbethoxybenzyl triphenyl phosphonium bromide,

carbethoxymethyl triphenyl phosphonium bromide, methoxymethyl triphenyl phosphonium chloride, allyloxymethyl triphenyl phosphonium chloride, allyl triphenyl phosphonium chloride, methallyl triphenyl phosphonium chloride and- bromide, and tetrabutyl phosphonium bromide.

A typical component accelerator, such as benzyl trioctyl phosphonium chloride, can be prepared by (1) providing a mixture of 37.0 grams trioctyl phosphine, 25.2 grams benzyl chloride, and 20 ml. methanol; (2) heating the mixture under nitrogen at 84°-90°C. under reflux for 11 hours; (3) removing methanol and unreacted benzyl chloride by distillation with 100 ml. of water; (4) removing water by means of a separatory funnel; (5) drying the resulting crude product (benzyl trioctyl phosphonium chloride) by exposing it to dry air in a laboratory hood for 16 hours at 25°C. and then heating it for 4 hours at 55°C. under a subatmospheric pressure of about 2 mm. of mercury. The preparation of phosphonium compounds useful as the accelerators are described by Davies and Lewis in J. Chem. Soc. 1934, 1959, and by Henderson and Buckler in J. Am. Chem. Soc. 82,5794 (1960).

Before the accelerator is blended with the other ingredients of the composition, it is often desirable to combine it (e.g., by mixing in a mortar and pestle) with fine particles of a solid material that undergoes no harmful reaction with the accelerator. For example, it can be combined in adsorbed or absorbed relationship with finely divided calcium carbonate, calcium silicate, silica or the like to form composite accelerator particles.

The cross-linking agent of the novel curable composition is selected from known polyhydroxylic

aromatic compounds capable of functioning as a cross-linking agent for the elastomeric copolymer. The cross-linking agent is usually added in amounts of from about 1.5-4 parts by weight per hundred parts fluoroelastomer, preferably 2-3 parts by weight. The cross-linking agent can be a bisphenol of the formula

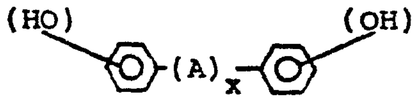

wherein A is a difunctional aliphatic, cycloaliphatic, or aromatic radical of 1-13 carbon atoms, or a thio, oxy, carbonyl, sulfinyl, or sulfonyl radical; A is optionally substituted with at least one chlorine or fluorine atom; x is 0 or 1; and the aromatic ring of the bisphenol is optionally substituted with at least one atom of chlorine, fluorine, or bromine, a -CHO group, or a carboxyl or acyl radical (e.g., a -COR where R is OH or a $C_1$-$C_8$ alkyl, aryl, or cycloalkyl group). It will be understood from the above bisphenol formula that the -OH groups can be attached in any position (other than number one) in either ring. Blends of two or more such compounds can also be used.

Referring to the bisphenol formula shown in the previous paragraph, when A is alkylene, it can be for example methylene, ethylene, chloroethylene, fluoroethylene, difluoroethylene, 1,3-propylene, 1,2-propylene, tetramethylene, chlorotetramethylene, fluorotetramethylene, trifluorotetramethylene, 2-methyl-1,3-propylene, 2-methyl-1,2-propylene, pentamethylene, pentachloropentamethylene, pentafluoropentamethylene, and hexamethylene. When A is alkylidene, it can be for example ethylidene, dichloroethylidene, difluoroethylidene, propylidene, isopropylidene, trifluoroisopropylidene, hexafluoroisopropylidene, butylidene,

heptachlorobutylidene, heptafluorobutylidene, pentylidene, hexylidene, and 1,1-cyclohexylidene. When A is a cycloalkylene radical, it can be for example 1,4-cyclohexylene, 2-chloro-1,4-cyclohexylene, 2-fluoro-1,4-cyclohexylene, 1,3-cyclohexylene, cyclopentylene, chlorocyclopentylene, fluorocyclopentylene, and cycloheptylene. Furthermore, A can be an arylene radical such as m-phenylene, p-phenylene, 2-chloro-1,4-phenylene, 2-fluoro-1,4-phenylene, o-phenylene, methylphenylene, dimethylphenylene, trimethylphenylene, tetramethylphenylene, 1,4-naphthylene, 3-fluoro-1,4-naphthylene, 5-chloro-1,4-naphthylene, 1,5-naphthylene, and 2,6-naphthylene.

In a preferred composition of the present invention for the manufacture of cured articles having especially good properties the accelerator used is an alkyl- or aralkyl-triarylphosphonium compound, and the crosslinking agent used is a bisphenol having the formula

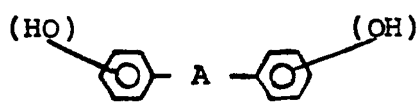

wherein A is an electron-withdrawing group.

In the highly preferred composition described in the previous paragraph, the electron-withdrawing group A of the bisphenol formula is preferably carbonyl, sulfinyl, sulfonyl, perfluorinated alkylene or perfluorinated alkylidene. The accelerator is preferably benzyl triphenyl phosphonium chloride or benzyl triphenyl phosphonium bromide. The cross-linking agent is preferably a compound having an oxidation potential of about 1.6-2.2 volts. The oxidation potential of the cross-linking agent can be conveniently measured

in the manner described in G. E. Penketh in "J. Appl. Chem." Vol. 7, page 512 (1957) except using acetonitrile as the solvent and using 0.1 molar tetramethyl ammonium perchlorate as the supporting electrolyte.

One highly preferred cross-linking agent is hexafluoroisopropylidene -bis(4-hydroxybenzene), which has an oxidation potential of 2.07 volts. A second preferred cross-linking agent is 4,4'-dihydroxydiphenyl sulfone, which has an oxidation potential of 1.92 volts. A third preferred cross-linking agent is 4,4'-dihydroxy-benzophenone, which has an oxidation potential of 1.78 volts. Another useful cross-linking agent is 2,4-dihydroxybenzophenone.

The curable fluoroelastomer composition also contains a metal compound composed of a divalent metal oxide or hydroxide, such as the oxides or hydroxides of magnesium, zinc, calcium or lead; or a mixture of the oxide and/or hydroxide with a metal salt of a weak acid, for example a mixture containing about 1-20 percent by weight of the metal salt. Among the useful metal salts of weak acids are barium-, sodium-, potassium-, lead-, and calcium-/-stearate, -benzoate, -carbonate, -oxalate, and -phosphite. The amount of the metal compound added generally is about 1-15 parts by weight per 100 parts of fluoroelastomer, about 2-10 parts being preferred. The metal compound concentration to some extent affects the rate of cure, and below the preferred range the cure rate is decreased. Above the preferred range, the elastic properties of a cured fluoroelastomer are gradually impaired and it is, therefore, advantageous not to exceed the preferred range of the metal compound.

The metal compound serves a dual purpose. It absorbs certain gaseous and acidic materials which are evolved during vulcanization and can chemically attack and weaken the fluoroelastomer. It also provides a long term aging stability. The metal oxide can be compounded with a fluoroelastomer stock either free or as a metal oxide complex or chelate with organic complexing agents and ligands, such as cyclic polyethers, amines, phosphines, ketones, alcohols, phenols, or carboxylic acids.

In preparing the fluoroelastomer to be used in the present composition, it is preferred that the reaction mixture of monomer components also contains a free-radical initiator, and the copolymer-forming reaction is carried out as a free radical emulsion polymerization reaction. Among the most useful free-radical initiators to use in such a reaction are ammonium persulfate, sodium persulfate, potassium persulfate, or a mixture of two or more such compounds. Also useful are other water-soluble inorganic peroxide compounds, for example sodium, potassium, and ammonium perphosphates, perborates, and percarbonates. The initiator can be used in combination with a reducing agent such as sodium, potassium, or ammonium sulfite, bisulfite, metabisulfite, hyposulfite, thiosulfate, phosphite, or hypophosphite, or in combination with a ferrous, cuprous, or silver salt, or other easily oxidized metal compound. Known organic free-radical initiators can also be used, preferably in combination with a suitable surfactant such as sodium lauryl sulfate or ammonium perfluorooctanoate. The surfactant can be selected from those known to be useful in the manufacture of fluoroelastomer. A surfactant can of course also be present when using

an inorganic initiator. A suitable known chain transfer agent can also be present during the emulsion polymerization reaction, but in many cases this is not preferred.

After completion of the preferred emulsion polymerization reaction, the copolymer can be isolated from the resulting polymer latex by known methods, for example by coagulation by adding an electrolyte or by freezing, followed by centrifuging or filtering and then drying the copolymer.

The copolymer-forming reaction can also be carried out in bulk, or in an organic liquid containing an organic free-radical initiator. It is usually preferred that none of the organic liquid present is a chain transfer agent.

During preparation of the copolymer, the reaction mixture is preferably heated in a reactor which has been flushed with an inert gas at about 50°C-130°C. under superatmospheric pressure, for example under a pressure of about 7-140 $kg/cm^2$, preferably about 35-105 $kg/cm^2$. In some of the most useful procedures, the polymerization is carried out as a continuous process and the reaction mixture has an average residence time in the reactor of about 5 to 30 minutes in some cases and up to 2 or 3 hours in others. Residence time can be calculated by dividing the reactor volume by the volume of latex produced per hour.

The fluoroelastomer used in the process of this invention in the majority of cases will have an inherent viscosity of about 0.01 or higher, with special preference for an inherent viscosity of about 0.2-1.2. Inherent viscosity of some of the fluoroelastomers can be measured at 30°C. at a copolymer concentration of 0.1% by weight in a

solvent composed of 87% by volume of tetrahydrofuran and 13% by volume of N,N-dimethylformamide.

The following examples in which all parts are by weight unless otherwise specified are illustrative of the invention.

Examples 1-8

A composition of the present invention is prepared by blending the following ingredients on a two-roll rubber mill: 100 parts fluoroelastomer A (a 35/34/29/2 wt% vinylidene fluoride/hexafluoropropylene/tetrafluoroethylene/4-bromo-3,3,4,4-tetrafluorobutene-1 tetrapolymer having a Mooney viscosity (ML-10 at 121°C) of about 60, 30 parts carbon black, 3 parts high activity magnesium oxide, 6 parts calcium hydroxide, 4 parts vulcanization accelerator [which is composed of 1 part benzyltriphenylphosphonium chloride dispersed in 2 parts of 60/40 vinylidene fluoride/hexafluoropropylene dipolymer with ML-10 at 100°C of about 52], 6 parts cross-linking agent [which is composed of 1 part hexafluoroisopropylidene-bis(4-hydroxybenzene) dispersed in 1 part of the dipolymer used in the vulcanization accelerator and amounts of 1,8-diazabicyclo[5,4,0]undec-7-ene, (DBU), the 2-ethylhexanoic acid salt of DBU, 1,4-diazabicyclo[2,2,2]octane, (DABCO), 1,5-diazabicyclo[4,3,0]non-5-ene, (DBN), and p-dimethylaminopyridine, as shown in Table 1.

Mooney scorch was measured on freshly milled uncured samples according to ASTM D-1646. Uncured compositions were also used to test cure characteristics with an oscillating disc rheometer (Micro ODR) according to ASTM D-2084. The cure states obtained at 177°C and 193°C are shown in the

tables as $M_H-M_L$ in N·m where $M_H$ and $M_L$ represent the highest and lowest torque readings, respectively. The value $t_s$ 0.2 represents the time from the beginning of the test to a torque increase of 0.2 N m from $M_L$. The time in minutes to reach 50% and 90% cure state are represented by $t_c$ 50 and $t_c$ 90.

Dumbbells for stress/strain measurement and O-rings for compression set measurement were prepared by compression molding at 177°C at a total force of 4 $MN/m^2$ of mold area as described in ASTM D-412 and ASTM D-395, Method B. The compression molded samples were postcured for 24 hrs. at 232°C in a circulating air oven. Modulus, tensile strength and elongation of the press and oven-cured samples were determined at room temperature according to ASTM D-412. Compression set was measured as described in ASTM D-395, Method B.

TABLE I

| Sample | Control | 1 | 2 | 3 | 4 | 5 | 6 | 7 | 8 |
|---|---|---|---|---|---|---|---|---|---|
| Fluoropolymer A | 100 | 100 | 100 | 100 | 100 | 100 | 100 | 100 | 100 |
| MT (N908) Carbon Black | 30 | 30 | 30 | 30 | 30 | 30 | 30 | 30 | 30 |
| Magnesium Oxide | 3 | 3 | 3 | 3 | 3 | 3 | 3 | 3 | 3 |
| Calcium hydroxide | 6 | 6 | 6 | 6 | 6 | 6 | 6 | 6 | 6 |
| Vulcanization accelerator | 4 | 4 | 4 | 4 | 4 | 4 | 4 | 4 | 4 |
| Cross-linking agent | 6 | 6 | 6 | 6 | 6 | 6 | 6 | 6 | 6 |
| DBU | - | 0.10 | 0.20 | - | - | - | - | - | - |
| DBU 2-ethylhexanoic acid salt | - | - | - | 0.30 | 0.60 | - | - | - | - |
| DABCO | - | - | - | - | - | 0.22 | - | - | - |
| DBN | - | - | - | - | - | - | 0.25 | - | - |
| p-dimethylaminopyridine | - | - | - | - | - | - | - | 0.12 | 0.37 |
| Mooney Scorch (MS/121°C) | | | | | | | | | |
| Minimum | 58 | 57.5 | 58.5 | 73 | 74 | 64 | 59 | 64 | 67 |
| Time to 5 point rise (min) | 11.5 | 11 | 14.6 | 11 | 4.8 | 25 | 11.8 | 10 | 4.8 |
| Time to 10 point rise (min) | 22 | 29 | 16.8 | 12.5 | 5.2 | 33 | 13.3 | 13.5 | 5.7 |
| Micro ODR (1° Arc), 24 min/177°C | | | | | | | | | |
| $M_H-M_L$ (N·m) | 4.70 | 5.60 | 5.67 | - | - | 4.92 | 5.22 | 3.07 | 2.73 |
| $t_s$ 0.2, (min) | 5.4 | 3.1 | 2.4 | - | - | 2.9 | 2.3 | 3.5 | 1.6 |
| $t_c$ 50, (min) | 9.7 | 4.2 | 3.2 | - | - | 4.4 | 3.9 | 5.9 | 2.7 |
| $t_c$ 90, (min) | 12.6 | 5.1 | 4.0 | - | - | 5.4 | 6.1 | 8.7 | 4.5 |

TABLE I (continued)

| Sample | Control | 1 | 2 | 3 | 4 | 5 | 6 | 7 | 8 |
|---|---|---|---|---|---|---|---|---|---|
| Micro ODR (1° Arc), 12 min/193°C | | | | | | | | | |
| $M_H$-$M_L$ (N·m) | 4.24 | 5.31 | 5.26 | - | - | - | - | - | - |
| $t_s$ 0.2, (min) | 3.1 | 1.9 | 1.5 | - | - | - | - | - | - |
| $t_c$ 50, (min) | 4.2 | 2.5 | 1.9 | - | - | - | - | - | - |
| $t_c$ 90, (min) | 5.1 | 3.1 | 2.5 | - | - | - | - | - | - |
| Micro ODR (1° Arc), 12 min/177°C | | | | | | | | | |
| $M_H$-$M_L$ (N·m) | - | - | - | 5.27 | 5.25 | - | - | - | - |
| $t_s$ 0.2, (min) | - | - | - | 2.2 | 1.4 | - | - | - | - |
| $t_c$ 50, (min) | - | - | - | 3.1 | 1.9 | - | - | - | - |
| $t_c$ 90, (min) | - | - | - | 4.0 | 2.6 | - | - | - | - |
| Stress/Strain | | | | | | | | | |
| 100% Modulus, MPa | 9.3 | 10.2 | 10.9 | 12.6 | 13.8 | 9.0 | 11.8 | 9.0 | 9.7 |
| Tensile Strength at break, MPa | 15.2 | 17.1 | 13.9 | 14.1 | 14.5 | 14.7 | 15.5 | 12.2 | 11.4 |
| Elongation at break, % | 180 | 170 | 130 | 110 | 105 | 170 | 135 | 125 | 110 |
| Compression Set Method (B) 2.54 cm x 0.353 cm o-rings | | | | | | | | | |
| 70 hr at 200°C, % | 37 | 29 | 33 | 37 | 40 | 46 | 32 | 40 | 46 |
| 70 hr at 232°C, % | 62 | 63 | 60 | 69 | 72 | 80 | 71 | 74 | 78 |

Examples 9-10

The compositions of Examples 9-10 were prepared as described above in Examples 1-8 but using the ingredients shown in Table II below in the amounts indicated. Fluoropolymer B is a 55/10/34.8/1.2 vinylidene fluoride/tetrafluoroethylene/perfluoromethyl perfluorovinyl ether/4-bromo-3,3,4,4-tetrafluorobutene-1 tetrapolymer having a Mooney viscosity (ML-10 at 121°C) of approximately 90.

TABLE II

| Sample | Controls | | 9 | 10 |
|---|---|---|---|---|
| Fluoropolymer B | 100 | 100 | 100 | 100 |
| MT (N908) Carbon Black | 30 | 30 | 30 | 30 |
| Magnesium Oxide | 3 | 3 | 3 | 3 |
| Calcium hydroxide | 10 | 10 | 10 | 10 |
| Vulcanization accelerator | 3 | 4 | 3 | 4 |
| Cross-linking agent | 4 | 6 | 4 | 6 |
| DBU 2-ethylhexanoic acid salt | - | - | 0.20 | 0.20 |
| Mooney Scorch (MS/121°C) | | | | |
| Minimum | 60 | 57 | 66 | 61.5 |
| Time to 5 point rise (min) | 26.5 | 45 | 12.3 | 14.5 |
| Time to 10 point rise (min) | 32 | - | 13.8 | 17 |
| Micro ODR (1° Arc), 30 min/149°C | | | | |
| $M_H$-$M_L$ (N•m) | 3.31 | 3.93 | 3.19 | 4.12 |
| $t_s$ 0.2, (min) | 8.8 | 12.8 | 5.2 | 6.6 |
| $t_c$ 50, (min) | 14.0 | 20.5 | 8.5 | 9.8 |
| $t_c$ 90, (min) | 22.0 | 25.0 | 17.8 | 18.0 |
| Press Cure, minutes at 149°C | 30 | 30 | 10 | 10 |
| Oven Step-cure | Heated for 1 hour at 100°C, then<br>Heated for 1 hour at 121°C, then<br>Heated for 1 hour at 149°C, then<br>Heated for 1 hour at 177°C, then<br>Heated for 1 hour at 204°C, and finally<br>Heated for 24 hours at 232°C to cure. | | | |

TABLE II (cont'd.)

| Stress/Strain | Controls | | 9 | 10 |
|---|---|---|---|---|
| 100% Modulus, MPa | 7.9 | 9.0 | 8.5 | 10.6 |
| Tensile Strength at Break, MPa | 13.6 | 14.2 | 13.3 | 14.9 |
| Elongation at Break, % | 165 | 160 | 155 | 140 |
| Hardness, Durometer A | 76 | 80 | 78 | 81 |
| % Compression Set Method (B), 2.54 cm x 0.353 cm O-rings | | | | |
| 70 hours at 200°C, % | 24 | 22 | 28 | 26 |
| 70 hours at 232°C, % | 47 | 54 | 66 | 63 |

CLAIMS

1. In a process for rapidly curing a fluoroelastomer composition which comprises mixing and heating:

(1) a fluoroelastomer copolymer whose interpolymerized units consist essentially of (a) vinylidene fluoride, (b) at least one other fluorine-containing monomer copolymerizable therewith, said monomer being a compound which contains 2-7 carbon atoms, contains no bromine atom, and contains at least as many fluorine atoms as carbon atoms and (c) contains up to 3 mole percent of units derived from a bromine-containing olefin with the proviso that enough of such units are present to provide at least 0.05 weight percent bromine in the copolymer;

(2) a vulcanization accelerator that is a quaternary phosphonium compound;

(3) a cross-linking agent selected from the group consisting of bisphenols or an ammonium or phosphonium salt thereof;

the improvement which comprises adding to the composition

0.1-0.4 parts by weight per hundred parts fluoroelastomer of (a) a dialkylaminopyridine wherein the alkyl groups independently contains 1-5 carbon atoms or (b) a diazabicyclo compound of the formula

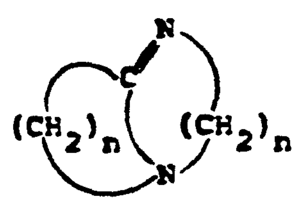

or

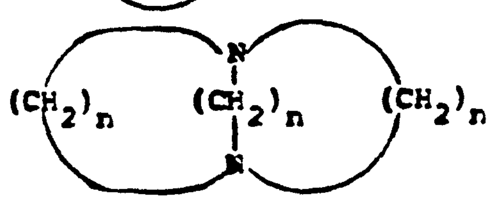

AD-5353

where n is 2-8 or

0.2-0.8 parts by weight per hundred parts fluoroelastomer of a carboxylic acid salt of (a) or (b).

2. A process of Claim 1 wherein the diazobicyclo compound is 1,5-diazabicyclo [3,2,0]non-5-ene.

3. A process of Claim 1 wherein the diazabicyclo compound is 1,4-diazabicyclo-[2,2,2]octane.

4. A process of Claim 1 wherein the diazabicyclo compound is 1,8-diazobicyclo[5,4,0]undec-7-ene.

5. A process of Claim 1 wherein the diazabicyclo compound is the 2-ethylhexanoic acid salt of 1,8-diazabicyclo[5.4.0]undec-7-ene.

6. A process of Claim 1 wherein the dialkylaminopyridine is dimethylaminopyridine.

7. A process of Claim 1 wherein a metal compound which is divalent metal oxide or divalent metal hydroxide is added to the mixture in amounts of from about 1-20 percent based on the weight of the fluoroelastomer copolymer.

8. A process of Claim 1 wherein the fluorine-containing monomer contains units derived from a perfluoroalkyl perfluorovinyl ether wherein the alkyl group contains 1-5 carbon atoms.

9. In a process for rapidly curing a fluoroelastomer composition which comprises mixing and heating to curing temperatures

(a) a copolymer whose interpolymerized units consist essentially of (a) 30-60 weight percent vinylidene fluoride, (b) 20-50 weight percent hexafluoropropylene and 3-35 weight percent tetrafluoroethylene (c) up to 3 mole percent of 4-bromo-3,3,4,4-tetrafluorobutene-1;

(b) 0.6-2 parts by weight per hundred parts copolymer of the vulcanization accelerator benzyltriphenylphosphonium chloride;

(c) 1.5-4 parts by weight per hundred parts copolymer of the cross-linking agent hexafluoropropylidene-bis-(4-hydroxybenzene);

the improvement which comprises adding 0.1-0.4 parts by weight per hundred parts fluoroelastomer of 1,8-diazabicyclo[5,4,0]unde-7-ene.